# FASCICULE DE BREVET EUROPEEN

(11) **EP 0 821 226 B1**
(45) Date de publication et mention de la délivrance du brevet: **16.06.2004**
(21) Numéro de dépôt: 97401731.1
(22) Date de dépôt: 17.07.1997
(51) Int. Cl.: G01N 21/72

(54) **Procédé et dispositif pour l'analyse en continu de bactéries dans une atmosphère gazeuse.**
Verfahren und Vorrichtung zur kontinuierlichen Analyse von Bakterien in einer gasförmigen Atmosphäre.
Method and device for continuously analyzing bacteria in a gaseous atmosphere.

(30) Priorité: 25.07.1996 FR 9609498
(43) Date de publication de la demande: 28.01.1998
(73) Titulaire: PROENGIN S.A., 78210 Saint-Cyr-l'Ecole (FR)
(72) Inventeur: Bleuse, Patrick, 78390 Bois D'Arcy (FR); Clausin, Pierre, 92410 Ville D'Avray (FR); Guene, Gilles, 78990 Elancourt (FR); Wurmser, Eric, 78210 Saint Cyr L'Ecole (FR)
(74) Mandataire: de Saint-Palais, Arnaud Marie

(56) Documents cités:
- DE-A- 1 598 288
- GB-A- 716 163
- US-A- 2 730 005

## Description

La présente invention concerne un procédé et un dispositif pour l'analyse à la fois qualitative et quantitative, en continu de la composition d'une atmosphère gazeuse contenant des bactéries en suspension.

Elle s'applique notamment, mais non exclusivement à la détection de bactéries présentes dans l'air ambiant.

D'une façon générale, on sait que pour analyser les bactéries en suspension dans l'air les procédés habituellement employés consistent à concentrer les particules, par exemple dans un filtre et à effectuer ensuite l'analyse de la matière retenue par le filtre.

Il s'agit là d'un procédé d'analyse de type discontinu nécessitant, d'une part un dispositif de prélèvement par filtration de l'air et, d'autre part, un laboratoire pour l'analyse des filtrats.

Un tel procédé ne permet donc pas d'effectuer une analyse en continu in situ fournissant des résultats instantanément.

L'invention a donc plus particulièrement pour but d'atteindre ce résultat à l'aide d'un appareil portatif et autonome peu coûteux compte tenu de la nature des résultats qu'il permet d'obtenir, et n'exigeant aucun traitement préalable de l'atmosphère gazeuse que l'on désire analyser.

L'invention se base sur la constatation que lorsqu'on effectue l'analyse spectrophotométrique de la lumière émise par la flamme résultant de la combustion d'un courant d'air chargé de particules dans de l'hydrogène, chaque particule produit un flash dont les émissions lumineuses peuvent être décomposées de manière à engendrer un spectre représentatif de la composition de la bactérie qui a produit le flash.

Ce phénomène se trouve décrit dans le brevet US 2 730 005 qui propose un détecteur de particules utilisant un spectrophotomètre de flamme exploitant le fait que les fluctuations des rayons lumineux peuvent servir à mesurer le nombre des particules, l'intensité des rayons indiquant leur tailles et le spectre lumineux servant à déterminer la composition chimique des particules.

Or, contrairement à l'analyse spectrophotométrique d'un spectre d'absorption dans une analyse d'un spectre d'émission (spectrométrie atomique) :
- le nombre de produits identifiables est limité au nombre fini de produits qui réagissent optiquement dans la flamme,
- le nombre de spectres de référence nécessaire pour l'identification des produits recherchés est également limité,
- le problème des interférents se pose avec beaucoup moins d'acuité.

L'invention se propose donc de tirer parti de toutes ces caractéristiques pour mettre au point un procédé pouvant être mis en oeuvre par un dispositif spectrophotométrique portatif et autonome relativement simple et peu coûteux.

D'une façon plus précise, ce procédé comprend la combustion en continu de l'atmosphère gazeuse à analyser dans un courant de gaz comburant à débit constant, la décomposition du rayonnement lumineux résultant de la combustion des particules de manière à obtenir en instantané des spectres lumineux correspondants, l'identification des bactéries à partir desdits spectres et le comptage des bactéries identifiées.

Le processus d'identification et de comptage des bactéries comprend :
- l'échantillonnage périodique desdits spectres et la conversion des échantillons en données numériques représentatives du spectre échantillonné,
- la détection des flashs produits par la combustion de bactéries dont l'intensité s'élève au-dessus d'un seuil, ainsi que la détection de l'émission lumineuse produite entre les flashs,
- une première analyse spectrophotométrique du rayonnement lumineux produit entre les flashs de manière à obtenir des premières données numériques spectrophotométriques relatives à la composition du gaz véhiculant les bactéries,
- une deuxième analyse spectrophotométrique du rayonnement lumineux produit pendant le flash de manière à obtenir des deuxièmes données spectrophotométriques,
- le traitement des deuxièmes données spectrophotométriques relevées pendant le flash en soustrayant aux deuxièmes données spectrophotométriques relevées pendant les flashs les premières données spectrophotométriques obtenues entre les flashs,
- la comparaison des valeurs spectrales résultant de cette soustraction à des données numériques représentatives de spectres de référence préalablement mémorisées,
- l'identification des bactéries lorsque la comparaison révèle une similitude, et
- le comptage sélectif, selon les espèces, les bactéries ainsi identifiées.

Avantageusement, ce procédé pourra, en outre, comprendre une analyse spectrophotométrique du rayonnement lumineux produit entre les flashs de manière à connaître la composition du gaz véhiculant les particules.

Par ailleurs, la taille des bactéries pourra être déterminée à partir de la détection de l'intensité lumineuse du flash.

Cette solution s'avère particulièrement efficace pour la détection et le comptage de bactéries dont l'identification s'obtient à partir de rapports des constituants détectés au cours du flash, ces rapports étant comparés à des rapports étalon préalablement mémorisés.

La décomposition des émissions lumineuses pourra s'effectuer dans un spectrophotomètre pouvant faire intervenir :
- des filtres interférentiels fixes associés à des détecteurs,
- un filtre interférentiel statique dont le pouvoir filtrant varie continûment en fonction de la longueur d'onde, ce filtre étant associé à une barrette de détecteurs (photodiodes), ou bien
- une optique dispersive (prisme ou réseau) permettant de décomposer la lumière en un spectre lumineux détectable par un système de détection optoélectronique fixe,
- un interféromètre associé à un circuit de traitement effectuant une transformée de Fourrier.

Avantageusement, le brûleur dans lequel s'effectue la combustion du mélange d'air et d'hydrogène pourra comprendre une optique focalisatrice du type de celle décrite dans la demande de brevet FR N° 96 00703 déposée au nom de la demanderesse, de manière à améliorer le rapport signal/bruit et pouvoir ainsi utiliser des photointensificateurs tels que, par exemple, des photomultiplicateurs.

Un mode d'exécution de l'invention sera décrit ci-après à titre d'exemple non limitatif, avec référence aux dessins annexés dans lesquels :
La figure 1 est une représentation schématique d'un spectrophotomètre de flamme selon l'invention ;
La figure 2 est un schéma montrant un spectre d'émission et le système de détection optoélectronique permettant sa numérisation ;
La figure 3 est une représentation schématique d'une cellule de détection optoélectronique associée à un filtre interférentiel.

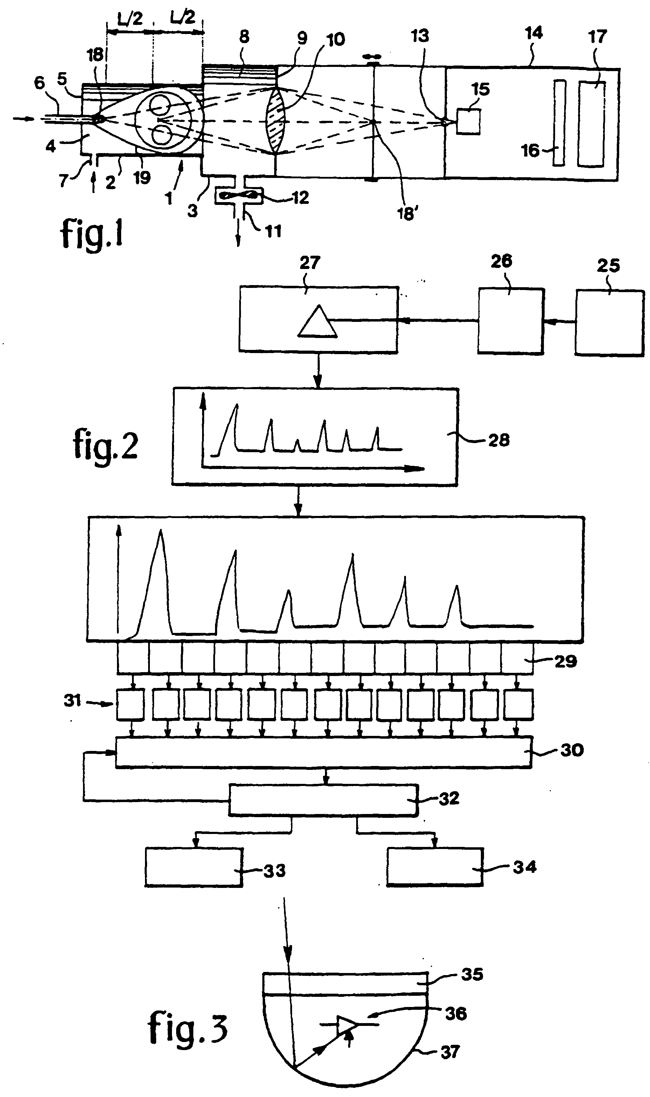

Dans l'exemple représenté sur la figure 1, le spectrophotomètre de flamme fait intervenir un brûleur tubulaire 1 comprenant deux buses coaxiales 2, 3 de différents diamètres et axialement décalées l'une par rapport à l'autre. Ces deux buses 2, 3 délimitent deux chambres successives, à savoir :
- une chambre de combustion 4 ouverte d'un côté et refermée de l'autre côté par un fond 5 traversé coaxialement par un conduit d'admission de gaz à analyser 6. Cette chambre 4 est par ailleurs reliée à un conduit d'injection d'hydrogène 7 qui traverse radialement la paroi longitudinale de la buse 2,
- une chambre de stabilisation 8 dans laquelle débouche la chambre de combustion 4, cette chambre 8 étant refermée d'un côté sur la buse 2 et de l'autre côté par un opercule 9 présentant une ouverture circulaire coaxiale dans laquelle est montée une lentille 10.

Cette chambre de stabilisation 8 présente un orifice d'échappement latéral raccordé à un circuit d'échappement 11 muni d'une turbine aspirante 12 actionnée par un moteur.

La lentille 10 est conçue de manière à focaliser la lumière engendrée par le panache de la flamme qui se propage dans la chambre de combustion 4 sur la fente d'entrée 13 d'un montage spectrophotométrique 14, par exemple de type classique faisant intervenir un élément dispersif 15 (prisme, réseau, filtre interférentiel) et un système de détection 16 pouvant comprendre une barrette de photodiodes intensifiées ou un photomultiplicateur relié à un circuit de traitement 17.

Le fonctionnement de ce spectrophotomètre est alors le suivant :

L'ensemble des deux chambres 4 et 8 est mis en dépression par la turbine 12 de manière à provoquer une aspiration du gaz à prélever dans le conduit d'admission 6.

A l'intérieur de la buse 2, le flux de gaz aspiré se mélange avec le courant d'hydrogène injecté de sorte qu'au sortir du conduit 6, on obtient une combustion engendrant une flamme qui se propage dans la chambre de combustion.

Cette flamme comprend un dard 18, de petites dimensions mais relativement lumineux, qui se prolonge par un panache 19 s'étendant sur la quasi totalité de la longueur L de la buse 2.

Pour s'affranchir des rayonnements lumineux engendrés par le dard 18 et donc du continuum, la lentille 10 est réglée de manière à obtenir l'image du dard 18 en amont de la fente 13 et l'image de la partie médiane du panache 19, au niveau de la fente 13 du montage spectrophotométrique 14.

En outre, un masque 18' de même dimension est prévu pour interrompre la propagation des rayons lumineux émis par le dard 18 en direction de la fente.

Dans l'exemple représenté sur la figure 2, le brûleur et l'optique focalisatrice sont représentés schématiquement par des blocs 25 et 26. L'élément dispersif (bloc 27) a été schématisé par un prisme qui engendre un spectre lumineux appliqué à l'entrée d'un intensificateur 28 tel qu'un photomultiplicateur multicanal. L'image du spectre ainsi intensifié est appliquée sur une surface photosensible constituée ici par une barrette de photodiodes 29.

La sortie de chacune de ces photodiodes 29 est connectée à une cellule d'un registre de mémoire 30 par l'intermédiaire d'un convertisseur analogique/numérique 31 qui fournit un signal numérique représentatif de l'intensité du rayonnement détecté par la photodiode 29.

Le registre mémoire est piloté par un microcalculateur 32 qui en effectue périodiquement une lecture.

Ce microcalculateur 32 comprend une mémoire 33 dans laquelle sont stockées des données relatives à une pluralité de spectres de référence correspondant aux bactéries recherchés ou même des données relatives à des rapports d'ensembles de constituants permettant de définir des bactéries.

Il compare les données contenues dans le registre au moment de chacune des lectures (spectre d'intensité en fonction de la longueur d'onde) aux données de référence et détecte les identités, voire les similarités, permettant d'identifier les composants du spectre produit à partir des émissions du brûleur 25 et donc les bactéries recherchés éventuellement présents.

L'algorithme utilisé pourra par exemple consister en un algorithme d'analyse multivoies de type connu, basé sur des traitements matriciels et statistiques.

Chaque fois qu'il détecte un composant pendant la période d'émission d'un flash, il incrémente un compteur 34 qui permettra de déterminer le nombre de bactéries contenant le composant par unité de temps et donc la teneur de l'atmosphère analysée en ce composant: En effet, chaque bactérie passant dans la flamme produit un flash de durée limitée, de sorte qu'en réglant la fréquence de lecture (fréquence d'échantillonnage), il est possible d'établir une relation entre le nombre de fois que le microprocesseur identifie un composant ou même un ensemble de composants identifiant une bactérie, et le nombre de bactéries de chaque espèce identifiées passant dans la flamme.

Bien entendu, l'invention ne se limite pas au mode d'exécution précédemment décrit.

Ainsi, au lieu d'utiliser une optique dispersive produisant le spectre d'émission de la flamme, il serait également possible de produire un faisceau lumineux de forme allongée, éventuellement intensifié et projeté sur une barrette de détection, comprenant par exemple comme représenté sur la figure 3 :
- un filtre interférentiel statique 35 dont le pouvoir filtrant varie en fonction de la longueur d'onde (ce filtre pouvant être constitué par la juxtaposition d'une multiplicité de filtres élémentaires),
- une barrette de photodiodes 36 destinée à détecter le rayonnement lumineux passant au travers du filtre 35, et
- éventuellement, une optique focalisatrice telle que par exemple un miroir incurvé 37, par exemple sphérique ou parabolique, permettant de concentrer le rayonnement lumineux filtré sur chacune des photodiodes 36.

De même, l'invention ne se limite pas à l'analyse et au comptage des bactéries présentes dans l'atmosphère : Elle permet également de déterminer la composition de l'atmosphère gazeuse par spectrophotométrie entre les périodes d'émission des flashes résultant de la combustion des bactéries.

Dans le cas où la teneur de l'atmosphère en bactéries serait trop élevée pour permettre un comptage des bactéries l'atmosphère pourra être diluée selon un processus connu. Dans ce cas, il conviendra de faire en sorte que le mode de dilution n'engendre pas une sélection des bactéries. Bien entendu, la dilution pourra être obtenue en ajoutant un courant de gaz additionnel et/ou en jouant sur les caractéristiques d'écoulement et de prélèvement du gaz.

## Revendications

1. Procédé pour l'analyse de la composition d'une atmosphère gazeuse contenant des bactéries, avec identification et comptage sélectif desdites bactéries, **caractérisé en ce qu'**il comprend la combustion en continu d'un flux de gaz à analyser dans un courant de gaz comburant à débit constant, la décomposition du rayonnement lumineux résultant de la combustion des particules contenues dans le gaz de manière à obtenir en instantané des spectres lumineux correspondants, la détection des flashes produits par la combustion de particules dont l'intensité s'élève au-dessus d'un seuil, la sélection des flashes produits par des particules présentant une composition prédéterminée et le comptage des particules sélectionnées, et **en ce que** le processus de sélection des flashes comprend un processus d'identification des bactéries comportant :
- le stockage préalable en mémoire de données relatives à une pluralité de spectres de référence correspondant aux éléments recherchés et de données relatives à des rapports étalons d'ensemble de constituants permettant de définir des bactéries,
- l'échantillonnage périodique desdits spectres et la conversion des échantillons en données numériques représentatives du spectre échantillonné,
- une première analyse spectrophotométrique du rayonnement lumineux produit entre les flashes de manière à obtenir des premières données numériques spectrophotométriques relatives à la composition du gaz véhiculant les bactéries,
- une deuxième analyse spectrophotométrique du rayonnement lumineux produit pendant les flashes de manière à obtenir des deuxièmes données numériques spectrophotométriques,
- le traitement des deuxièmes données numériques spectrophotométriques relevées pendant le flash, ce traitement comprenant la soustraction aux deuxièmes données spectrophotométriques relevées pendant les flashes, les premières données spectrophotométriques obtenues entre les flashes,
- la comparaison des données issues de cette soustraction avec les données numériques stockées en mémoire et l'identification de constituants recherchés lorsque cette comparaison révèle des similitudes,
- l'identification de bactéries par la comparaison des rapports des constituants détectés au cours d'un flash avec les rapports étalons initialement stockés en mémoire,
- le comptage sélectif du nombre de fois qu'une même bactérie a été identifiée pendant une période de temps prédéterminée de manière à déterminer leur nombre par unité de volume.

2. Procédé selon la revendication 1,
**caractérisé en ce que** la susdite étape d'échantillonnage comprend :
- l'application du spectre lumineux sur une surface photosensible comprenant une pluralité de photoéléments (29) dont les sorties sont connectées à des cellules respectives d'un registre mémoire piloté par un calculateur (32), et
- la lecture périodique du registre mémoire par le calculateur, la fréquence de lecture correspondant à la fréquence d'échantillonnnage.

3. Procédé selon la revendication 1,
**caractérisé en ce que** qu'il comprend la détermination de la taille des bactéries à partir de la détection de l'intensité lumineuse des flashes.

4. Procédé selon l'une des revendications précédentes,
**caractérisé en ce que** le susdit gaz consiste en de l'air ambiant, et **en ce que** le susdit comburant consiste en de l'hydrogène ou autre.

5. Procédé selon l'une des revendications précédentes,
**caractérisé en ce que** la décomposition des émissions lumineuses s'effectue dans un spectrophotomètre faisant intervenir des filtres interférentiels situés devant des détecteurs optoélectroniques sur lesquels les rayonnements lumineux sont focalisés.

6. Procédé selon l'une des revendications 1 à 4,
**caractérisé en ce que** la décomposition des émissions lumineuses s'effectue dans un spectrophotomètre faisant intervenir un filtre interférentiel statique dont le pouvoir filtrant varie en fonction de la longueur d'onde, ce filtre étant associe à une barrette de détecteurs (photodiodes).

7. Procédé selon l'une des revendications 1 à 4,
**caractérisé en ce que** la décomposition des émissions lumineuses s'effectue dans un spectrophotomètre faisant intervenir une optique dispersive (prisme ou réseau) permettant de décomposer la lumière en un spectre lumineux détectable par un système de détection optoélectronique fixe.

8. Procédé selon l'une des revendications 1 à 4,
**caractérisé en ce que** la décomposition des émissions lumineuses s'effectue dans un spectrophotomètre faisant intervenir un interféromètre associé à un circuit de traitement effectuant une transformée de Fourrier.

9. Procédé selon l'une des revendications précédentes,
**caractérisé en ce que** le spectre du rayonnement produit par la susdite combustion est photointensifié.

10. Dispositif pour l'analyse de la composition d'une atmosphère gazeuse contenant des bactéries en suspension, **caractérise en ce qu'**il comprend un brûleur dans lequel s'effectue la combustion en continu de l'atmosphère gazeuse à analyser dans un courant de gaz comburant à débit constant, un élément dispersif du rayonnement lumineux produit par ladite combustion et focalisé par des moyens de focalisation, cet élément dispersif engendrant un spectre lumineux et des moyens photosensibles optoélectroniques fournissant des données électriques représentatives dudit spectre, et **en ce que** le spectre lumineux délivré par l'élément dispersif est appliqué à l'entrée d'un intensificateur (28) qui produit une image intensifiée du spectre sur les moyens photosensibles optoélectroniques (25), et **en ce qu'**il comprend :
- un microcalculateur (32) qui convertit les données détectées en données numériques représentatives du spectre échantillonné, ce microcalculateur comprenant une mémoire dans laquelle sont stockées des données relatives à une pluralité de spectres de référence correspondant aux constituants recherchés et des données relatives à des rapports étalons d'ensembles de constituants permettant de définir des bactéries,
- un registre de mémoire (30) stockant les données détectées par les moyens photosensibles (25),
- des moyens de détection des flashes produits par la combinaison des particules dont l'intensité s'élève au-dessus d'un seuil,
- un soustracteur permettant de soustraire aux données numériques représentatives du spectre échantillonné relevées pendant les flashes les valeurs numériques représentatives du spectre échantilloné rélevées entre les flashes,
- des moyens permettant de calculer des rapports des constituants détectés au cours d'un flash de comparer les valeurs spectrales résultant de ladite soustraction à des données numériques représentatives de spectres de référence préalablement mémorisés et qui correspondent aux constituants recherchés,
- des moyens permettant d'identifier les constituants par comparaison des rapports calculés relatifs aux constituants détectés au cours d'un flash avec les rapports étalons stockés en mémoire,
- des moyens de comptage sélectifs incrémentés sélectivement par le microcalculateur (32) chaque fois qu'il détecte et qu'il identifie une bactérie grâce à la susdite comparaison pendant la période d'émission d'un flash.

## Patentansprüche

1. Verfahren zur Analyse der Zusammensetzung einer gasförmigen Atmosphäre, in der Bakterien enthalten sind, mit Identifizierung und selektiver Zählung der Bakterien, **dadurch gekennzeichnet, daß** es die kontinuierliche Verbrennung eines zu analysierenden Gasflusses in einem die Verbrennung mit konstanter Geschwindigkeit bewirkenden Gasstrom, die Zerlegung der Lichtstrahlung, die sich aus der Verbrennung der in dem Gas enthaltenen Partikel ergibt, um so augenblicklich die entsprechenden Lichtspektren zu erhalten, die Erfassung der durch die Verbrennung der Partikel erzeugten Blitze, deren Stärke einen Schwellenwert überschreitet, die Auswahl der Blitze, die durch Partikel erzeugt werden, die eine vorgegebene Zusammensetzung aufweisen, und das Zählen der ausgewählten Partikel umfaßt, und dadurch, daß das Auswahlverfahren der Blitze ein Verfahren zur Identifizierung der Bakterien umfaßt, das folgendes aufweist:
- das vorherige Speichern in einer Speichervorrichtung von Daten, die sich auf eine Vielzahl von Referenzspektren beziehen, die den gesuchten Elementen entsprechen, und von Daten, die sich auf Maßverhältnisse aller Bestandteile beziehen, die das Definieren der Bakterien gestatten,
- die periodische Probennahme der Spektren und die Umwandlung der Proben in numerische Daten, die das Probenspektrum darstellen,
- eine erste spektrophotometrische Analyse der Lichtstrahlung, die zwischen den Blitzen erzeugt wird, so daß erste numerische spektrophotometrische Daten erhalten werden, die in Beziehung zur Zusammensetzung des Gases stehen, das die Bakterien mitführt,
- eine zweite spektrophotometrische Analyse der Lichtstrahlung, die während der Blitze erzeugt wird, so daß zweite numerische spektrophotometrische Daten erhalten werden,
- die Verarbeitung der zweiten numerischen spektrophotometrischen Daten, die während des Blitzes abgenommen wurden, wobei diese Verarbeitung die Subtraktion der ersten, zwischen den Blitzen erhaltenen spektrophotometrischen Daten von den zweiten spektrophotometrischen Daten umfaßt, die während der Blitze abgenommen wurden,
- den Vergleich der Daten, die sich aus dieser Subtraktion ergeben, mit den numerischen Daten, die in der Speichervorrichtung gespeichert sind, und die Identifizierung der gesuchten Bestandteile, wenn dieser Vergleich Ähnlichkeiten aufzeigt,
- die Identifizierung der Bakterien durch Vergleichen der Verhältniswerte der im Laufe eines Blitzes erfaßten Bestandteile mit den Maßverhältnissen, die zu Beginn in der Speichervorrichtung gespeichert wurden,
- die selektive Zählung, wie oft ein gleiches Bakterium während einer vorgegebenen Zeitperiode identifiziert worden ist, um so die Anzahl pro Volumeneinheit zu ermitteln.

2. Verfahren nach Anspruch 1, **dadurch gekennzeichnet, daß** die oben genannte Phase zur Probennahme umfaßt:
- das Anwenden des Lichtspektrums auf eine lichtempfindliche Oberfläche, die eine Vielzahl von Photoelementen (29) umfaßt, deren Ausgänge an Zellen von jeweils einem Speicherregister angeschlossen sind, das von einer Rechnervorrichtung (32) gesteuert wird, und
- das periodische Lesen des Speicherregisters durch die Rechnervorrichtung, wobei die Lesefrequenz der Probennahme-Frequenz entspricht.

3. Verfahren nach Anspruch 1, **dadurch gekennzeichnet, daß** es die Ermittlung der Größe der Bakterien ausgehend von der Erfassung der Lichtstärke der Blitze umfaßt.

4. Verfahren nach einem der vorhergehenden Ansprüche, **dadurch gekennzeichnet, daß** das oben genannte Gas aus Umgebungsluft besteht, und dadurch, daß die oben genannte, die Verbrennung bewirkende Substanz aus Wasserstoff oder sonstigem besteht.

5. Verfahren nach einem der vorhergehenden Ansprüche, **dadurch gekennzeichnet, daß** die Zerlegung der Lichtstrahlungen in einem Spektrophotometer erfolgt, in dem Interferenzfilter dazwischengestellt sind, die sich vor den optoelektronischen Detektoren befinden, auf welche die Lichtstrahlen fokussiert sind.

6. Verfahren nach einem der Ansprüche 1 bis 4, **dadurch gekennzeichnet, daß** die Zerlegung der Lichtstrahlungen in einem Spektrophotometer erfolgt, das einen statischen Interferenzfilter dazwischenstellt, dessen Filterleistung in Abhängigkeit von der Wellenlänge schwankt, wobei dieser Filter mit einer Detektorleiste (Photodioden) verbunden ist.

7. Verfahren nach einem der Ansprüche 1 bis 4, **dadurch gekennzeichnet, daß** die Zerlegung der Lichtstrahlungen in einem Spektrophotometer erfolgt, das eine Streuoptik (Prisma oder Netz) dazwischenstellt, die das Zerlegen des Lichts in ein Lichtspektrum gestattet, das durch ein stationäres optoelektronisches Erfassungssystem erfaßt werden kann.

8. Verfahren nach einem der Ansprüche 1 bis 4, **dadurch gekennzeichnet, daß** die Zerlegung der Lichtstrahlungen in einem Spektrophotometer erfolgt, das einen Interferenz-Frequenzmesser dazwischenstellt, der mit einem Verarbeitungsschaltkreis verbunden ist, der eine Fourrier-Transformation vornimmt.

9. Verfahren nach einem der vorhergehenden Ansprüche, **dadurch gekennzeichnet, daß** das Spektrum der durch die oben genannte Verbrennung erzeugten Strahlung lichtverstärkt wird.

10. Vorrichtung zur Analyse der Zusammensetzung einer gasförmigen Atmosphäre, in der Bakterien schwebend enthalten sind, **dadurch gekennzeichnet, daß** sie einen Brenner umfaßt, in dem die kontinuierliche Verbrennung der zu analysierenden gasförmigen Atmosphäre in einem die Verbrennung mit konstanter Geschwindigkeit bewirkenden Gasstrom erfolgt, ein Streu-Element für die Lichtstrahlung, die von der Verbrennung erzeugt und durch Fokussierungsmittel fokussiert wird, wobei das Streu-Element ein Lichtspektrum erzeugt, und lichtempfindliche optoelektronische Mittel, die elektrische Daten liefern, die das Spektrum darstellen, und dadurch, daß das von dem Streu-Element gelieferte Lichtspektrum an den Eingang eines Verstärkers (28) angelegt wird, der ein verstärktes Bild des Spektrums auf lichtempfindlichen optoelektronischen Mitteln (25) erzeugt, und dadurch, daß sie folgendes umfaßt:
- eine Mikro-Rechnervorrichtung (32), welche die erfaßten Daten in numerische Daten umwandelt, die das Probenspektrum darstellen, wobei diese Mikro-Rechnervorrichtung einen Speicher umfaßt, in dem Daten gespeichert sind, die sich auf eine Vielzahl von Referenzspektren beziehen, die den gesuchten Bestandteilen entsprechen, und Daten, die sich auf Maßverhältnisse aller Bestandteile beziehen, die das Definieren der Bakterien gestatten,
- ein Speicherregister (30), das die Daten speichert, die durch die lichtempfindlichen Mittel (25) erfaßt werden,
- Mittel zum Erfassen der Blitze, die durch die Verbindung der Partikel erzeugt werden und deren Stärke einen Schwellenwert überschreitet,
- eine Subtrahiervorrichtung, die das Subtrahieren der numerischen Werte, die das Probenspektrum darstellen und zwischen den Blitzen abgenommen wurden, von den numerischen Daten gestattet,. die für das Probenspektrum stehen und während der Blitze abgenommen wurden,
- Mittel, die das Berechnen der Verhältnisse der während eines Blitzes erfaßten Bestandteile und das Vergleichen der aus der Subtraktion erhaltenen Spektralwerte mit numerischen Daten gestatten, die die vorher gespeicherten Referenzspektren darstellen und die den gesuchten Bestandteilen entsprechen,
- Mittel, die das Identifizieren der Bestandteile durch Vergleichen der berechneten Verhältnisse, die sich auf die während eines Blitzes erfaßten Bestandteile beziehen, mit den im Speicher gespeicherten Maßverhältnissen gestatten,
- Mittel zur selektiven Zählung, die durch die Mikro-Rechnervorrichtung (32) selektiv jedesmal erhöht werden, wenn sie während der Abstrahlperiode eines Blitzes ein Bakterium erfaßt und dank des oben genannten Vergleichens identifiziert.

## Claims

1. A method for the analysis of the composition of a gas atmosphere containing bacteria, with identification and selective count of said bacteria, **characterised in that** it comprises the continuous combustion of a flow of gas for analysing in a constant flow of oxidant gas, the decomposition of the light rays resulting from the combustion of the particles contained in the gas so as to instantly obtain the corresponding light spectra, the detection of the flashes produced by the combustion of the particles whose intensity increases above a threshold, the selection of the flashes produced by the particles presenting a pre-determined composition and the count of the selected particles, and **in that** the method for the selection of the flashes comprises a method for the identification of the bacteria comprising:
- the preliminary storage of data concerning a plurality of reference spectra corresponding to the elements searched for and data concerning the standard ratios of all of the components enabling definition of the bacteria,
- the periodic sampling of said spectra and the conversion of the samples into digital data representative of the sampled spectrum,
- a first spectrophotometric analysis of the light rays produced between the flashes so as to obtain the first spectrophotometric digital data concerning the composition of the gas carrying the bacteria,
- a second spectrophotometric analysis of the light rays produced during the flashes so as to obtain second spectrophotometric digital data,
- the processing of the second spectrophotometric digital data listed during the flash, this processing comprising the subtraction at the second spectrophotometric data listed during the flashes, the first spectrophotometric data obtained between the flashes,
- the comparison of the data resulting from this subtraction with the digital data stored and the identification of the components searched for when this comparison reveals similarities,
- the identification of the bacteria by the comparison of the ratios of the components detected during a flash with the standard ratios initially stored,
- the selective count of the number of times the same bacteria has been identified during a predetermined period of time so as to determine their number per unit of volume.

2. A method according to claim 1,
**characterised in that** said step of sampling includes:
- the application of the light spectrum on a photosensitive surface comprising a plurality of photo-elements (29) whose outlets are connected to respective cells of a memory register driven by a computer (32), and
- the periodic reading of the memory register by the computer, the frequency of reading corresponding to the frequency of sampling.

3. A method according to claim 1,
**characterised in that** it comprises the determination of the size of the bacteria from the detection of the light intensity of the flashes.

4. A method according to any of the preceding claims,
**characterised in that** said gas consists of ambient air, and **in that** the aforementioned oxidant consists of hydrogen or the like.

5. A method according to any of the previous claims,
**characterised in that** the decomposition of the light emissions is carried out in a spectrophotometer involving interferential filters located in front of the optoelectronic sensors on which the light rays are focused.

6. A method according to any of claims 1 to 4,
**characterised in that** the decomposition of the light emissions is carried out in a spectrophotometer involving a static interferential filter whose filtering power varies as a function of the wavelength, this filter being associated with a bar of sensors (photodiodes).

7. A method according to any of claims 1 to 4,
**characterised in that** the composition of the light emissions is carried out in a spectrophotometer involving a dispersive optic (prism or network) enabling the decomposition of the light into a light spectrum detectable by a system of fixed optoelectronic detection.

8. A method according to any of claims 1 to 4,
**characterised in that** the decomposition of the light emissions is carried out in a spectrophotometer involving an interferometer associated with a processing circuit carrying out a Fourrier transform.

9. A method according to any of the preceding claims,
**characterised in that** the spectrum of the rays produced by the aforementioned combustion is photointensified.

10. A device for the analysis of the composition of a gas atmosphere containing bacteria in suspension **characterised in that** it comprises a burner in which the continuous combustion of the gas atmosphere to analyse is carried out in a constant flow of oxidant gas, a dispersion element of the light rays produced by said combustion and focalised by means of focalisation, this dispersion element generating a light spectrum and optoelectronic photosensitive means providing electric data representative of said spectrum, and
**in that** the light spectrum delivered by the dispersion element is applied at the entry of an intensifier (28) that produces an intensified image of the spectrum on the optoelectronic photosensitive means (25), and **in that** it comprises:
- a micro-computer (32) that converts the data detected into digital data representative of the sampled spectrum, this micro-computer comprising storage in which the data concerning a plurality of reference spectra are stored corresponding to components searched for and data concerning standard ratios of sets of components enabling the definition of bacteria,
- a memory register (30) storing data detected by photosensitive means (25),
- means of detection of the flashes produced by the combination of the particles whose intensity rises above a threshold,
- a subtractor enabling the substraction of the used to subtract from the digital data representative of the sampled spectrum listed between the flashes, the digital values representative of the sampled spectrum detected during the flashes,
- means enabling calculation of the ratios of the components detected during a flash, comparison of the spectral values resulting from said subtraction with digital data representative of the reference spectra previously stored and that correspond to the components searched for,
- means enabling identification of the components by comparison of the ratios calculated with respect to the components detected during a flash with the reference ratios stored,
- selective means of counting incremented selectively by the micro-computer (32) each time that it detects and identifies a bacteria due to the aforementioned comparison during the period of emission of a flash.
